# EUROPEAN PATENT APPLICATION

(11) **EP 2 537 666 A1**
(43) Date of publication of application: **26.12.2012**
(21) Application number: 11170470.6
(22) Date of filing: 20.06.2011
(51) Int. Cl.: B29C 70/78, B41M 5/124, B29C 70/88

(54) **Method of making an impact-indicating coating on a surface of an article made of composite materials**

(71) Applicant: Latvijas Universitates agentura "Latvijas Universitates Polimeru mehanikas Instituts", 1006 Riga (LV)
(72) Inventor: Vidinejevs, Sergejs, 1082 Riga (LV); Strekalova, Olga, 2114 Olaine (LV); Aniskevics, Andrejs, 1063 Riga (LV)
(74) Representative: Anohins, Vladimirs

(57) **Abstract**

A method of making an impact-indicating coating on a surface of an article comprises the following steps: providing an article having an outer surface made of a composite material; providing a prepreg comprising a fibre ply pre-impregnated in a curable polymer composition containing a microencapsulated dye and an activator; applying the prepreg to the surface of the article; curing the prepreg. Preferably a top layer is applied onto the article covered by the prepreg and the parameters of the top layer are chosen to provide a required sensitivity of the impact-indicating coating. The prepreg for practicing the method is also provided.

## Description

### FIELD OF THE INVENTION

The invention relates to a method of making an impact-indicating coating on a surface of an article made of composite materials, and in particular to a method which uses an impact-sensitive material comprising a microencapsulated dye.

### BACKGROUND OF THE INVENTION

The advantages of making high-strength, relatively lightweight articles from fibre-reinforced composites are well known in the prior art. Generally, the articles made of composite fibre-reinforced materials are high in strength, and yet have a relatively low weight. Such articles become widely used in a variety of applications. However, such articles have a specific reaction to impact. As composites are commonly used in a sheet or sheet-like form, damage after impact typically occurs through the thickness direction. Composites exhibit little or no plastic deformation, such that impact energy is largely absorbed as either an elastic deformation or a structural damage. Such a structural damage can occur internally within the composite material. Alternatively, the damage can manifest itself on the opposing surface to the surface receiving the actual impact. In such cases, the surface receiving the impact may show little or no evidence of either impact or damage.

Different methods have been developed for damage detection or impact registration. GB21940621 A describes a coating that can be applied to a structure to indicate damage to the structure that is otherwise not generally visible, the coating includes a plurality of dye-loaded opaque capsules which are designed to rupture when the structure is subject to a pressure greater than that liable to damage the structure. When ruptured, the capsules release the dye, which is readily visible. The layer containing the dye-loaded capsules may be applied to a structure in the form of paint or primer in which the capsules are dispersed in a binder.

In US5242830 there is proposed a process for revealing impacts received by a substrate comprising applying an impact-sensitive layer to the substrate, the layer comprising a matrix having frangible microcapsules dispersed therein intended to be broken by impact. The matrix is applied to the surface in the form of paint or varnish.

US 2007/0197383 Al discloses a method for detecting damages wherein an article is subject to coating by a pressure-sensitive material comprising at least one type of dye and at least one type of activator. Preferably, the dye is a microencapsulated dye. Cromogenic compounds may also be employed as dyes. Preferably, the dyes are visible dyes of the type known as leuco dyes, which undergo a colour change with a change in the pH. In US 2007/0197383 Al there is provided applying the coating to the article by application techniques such as spraying, spin coating, rolling, or dipping.

However, applying an impact-indicating coating in the form of paint has several disadvantages. In particular, a surface of the article usually needs a special treatment before painting, the paint is often not so durable as may be required for many applications, a Volatile Organic Component (VOC) emission during the process of application are hazard for environment. Further, a pressure sensitivity of the paint mainly depends on the material and size of the microcapsules, thus, in order to obtain a coatings having different sensitivity threshold, different capsules need to be used, what is not always practical. Another not always practical circumstance is a necessity to get accordance and chemical tolerance of a dye, capsule shell, paint binder and article.

It seems promising to embed pressure-sensitive microcapsules directly into a polymer matrix of the article, however it is not always reasonably practical. For example, if an epoxy resin is used in the article as a binder, the alkaline properties of the resin hardener conflict with an acid nature of the colour activator. Therefore, there is a need for an alternative solution.

There is thus a need in the art for an alternative method of making an impact-indicating coating on a surface of an article made of composite materials that does not require pretreating of the article surface before applying the indicating coating to it. There is thus a need for a method of making an impact-indicating coating that allows combining chemically antagonistic constituents of the coating and the article. There is also a need for a method that allows for producing coatings with different sensitivity.

### SUMMARY OF THE INVENTION

Accordingly, it is an object of this invention to at least partially overcome the disadvantages of the prior art. Thus, it is an object of this invention to provide an improved method of making an impact-indicating coating on a surface of an article. Another object of this invention is to provide a corresponding fibre composite component, a prepreg, for making the impact-indicating coating.

In accordance with the invention, a method of making an impact-indicating coating on a surface of an article comprises the following steps: providing an article having an outer surface made of a composite material; providing a prepreg comprising a fibre ply pre-impregnated in a curable polymer composition containing a microencapsulated dye and an activator; applying the prepreg to the surface of the article; curing the prepreg.

Any article that may be subjected to coating or covering by a material is suitable for the method of the present invention. In particular, structural composites such as aircraft, boats, automobiles, and helmets are suitable articles.

The method may further comprise a step of partially pre-curing the prepreg before applying it to the article.

Preferably, when prepreg is applied to the article, the outer surface of the article is in a semi-curable state. Alternatively, the article may be provided in an uncured state and the method further may comprises a step of curing the article after applying the prepreg. In a latter case the steps of curing the article and curing the prepreg are, preferably, performed simultaneously in the same technological cycle.

Preferably the method further comprises a step of applying a top layer onto the article covered by the prepreg, wherein the parameters of the top layer are chosen to provide a required sensitivity of the impact-indicating coating. A desired sensitivity of the impact-indicating coating may be obtained by selecting appropriate microencapsulated dye, however it is advantageous and cost effective to use one type of dye for different coatings. In that case a desired sensitivity of the coating may be obtained by choosing parameters of the top layer. Thus by choosing the material and/or the thickness of the top layer the sensitivity of the impact-indicating coating may be varied over a wide range.

In accordance with another aspect of the invention, a prepreg for making an impact-indicating coating on a surface of an article made of composite materials comprises fibre ply pre-impregnated in a curable polymer composition containing a microencapsulated dye and an activator.

There are also no particular restrictions on the form of the fibre ply used in the prepreg, and suitable examples include plain weave fabric, twill fabric, satin weave fabric, stitched sheets such as non-crimped fabric (NCF) wherein fibre bundles are layered, either unidirectionally or at various angles, and then stitched to prevent the layers coming apart, as well as non-woven fabric, mats, and unidirectional materials in which a bundle of reinforcing fibres is aligned unidirectionally. Of these, woven fabrics and stitched sheets, which offer superior levels of handling, are preferred.

Preferably, the fibre ply material is selected from the group consisting of glass, carbon, aramid, polyethylene, and nylon. Preferably, the fibre ply is a woven ply. More preferably, the fibre ply is a woven glass fibre ply.

The curable polymer used for the prepreg may be any polymer known to one of ordinary skill in the art, and the choice of the polymer is specific for the application. Preferably, the curable polymer composition is selected from the group consisting of epoxy, polyester, acrylic, polyurethane or their combination.

Advantageously, the curable polymer composition is an UV curable composition. Curing the prepreg by ultra-violet radiation may be advantageous, for example, if it is undesirable, or inconvenient to heat the article.

Any microencapsulated dye known to those of ordinary skill in the art may be employed. Various dyes are selected based on the final application. When the coating is subject to certain impact strength that may cause damage to the article, the microcapsules break exposing the dye to the activator, causing a visible colour change at the point of impact. Preferably microencapsulated leuco dyes, similar to those used in pressure-sensitive paper are used because of their stability.

Advantageously, a colour of the fibre ply is selected to provide a contrast background for the dye when the dye is in an activated state. That is the additional advantage of the prepreg based impact-indicating coating in that the background colour is defined by the colour of the impregnated fibre ply, therefore the coating will look the same on an article of any colour and there is no need to select a dye colour depending on the colour of underlying article surface.

The term "dye" in this specification means any material, which, upon reacting with an activator material, is visible to the human eye or an imaging device (e.g. camera) or can be made visible to the human eye or an imaging device by exposure to an appropriate radiation such as ultra violet radiation.

The term "repreg" in the context of this application means a fibre-reinforced material which contains a curable polymer composition and which can be processed to a composite by exposure to acting radiation, for example a ultra-violet radiation (UV), and/or by assistance of heat.

The term "impact" in the context of the present description is meant as mechanical loads, static and dynamic loads, to which articles made of composite materials are frequently exposed.

Other advantages of the present invention will become apparent in view of the following detailed description and accompanying drawings.

### BRIEF DESCRIPTION OF DRAWINGS

FIG. 1 is a schematic view of a prepreg for making an impact-indicating coating.
FIG. 2 is a schematic view of an impact-indicating coating according to a preferred embodiment of the present invention.

### DETAILED DESCRIPTION OF THE PREFERRED EMBODIMENTS

As stated previously, the present invention in its broad aspect provides a method of making an impact-indicating coating on a surface of an article made of composite materials in which the surface of the article is capable of generating a visible indication thereon upon impact by a foreign object. In accordance with the invention, a method of making an impact-indicating coating on a surface of an article comprises the following steps: providing an article having an outer surface made of a composite material; providing a prepreg comprising a fibre ply pre-impregnated in a curable polymer composition containing a microencapsulated dye and an activator; applying the prepreg to the surface of the article; curing the prepreg.

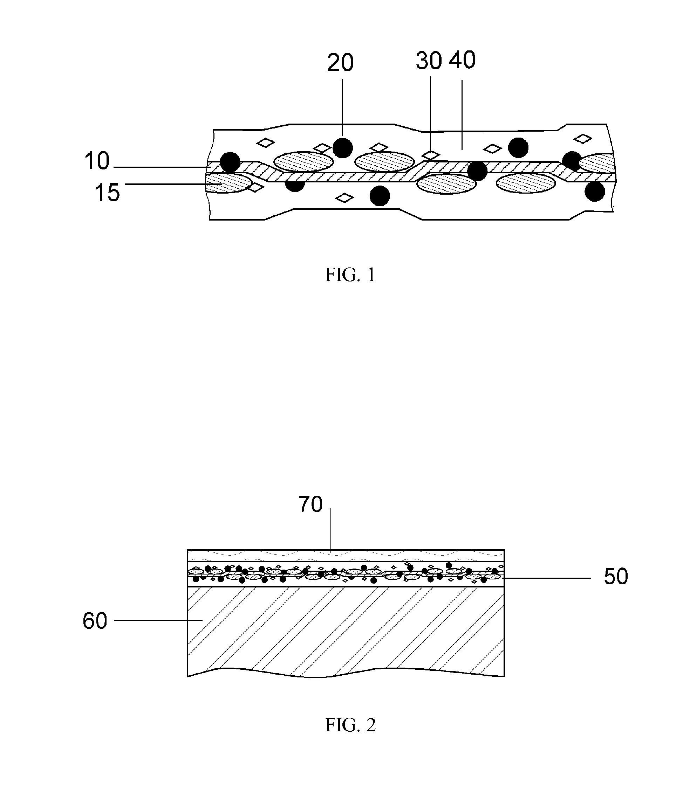

A prepreg for making an impact-indicating coating on an article of polymer composites consists of a combination of a matrix that is able to polymerise during curing constituent, and fibre reinforcement. The prepreg includes, in general, at least one type of fabrics, for example, woven fabrics, non-crimp fabrics at al. As shown on FIG.1 woven fabrics with a warp 10 and a weft 15 manufactured from any type of fibre, for example, fibreglass, carbon, aramid, polyethylene, synthetic and natural fibre at al., is impregnated with a liquid mixture which comprises at least one type of microencapsulated dye 20, and at least one type of activator or colour developer 30, and at least one type of polymerising liquid substance 40. The polymerising liquid substance used in the prepreg may be any polymer known to one of ordinary skill in the art, and the choice of the polymer is specific for the application to the composite matrix. For example, should the prepreg be applicable to impact indication with respect to aircraft constructions with matrix prepared from a solvent based polymeric resin system such as epoxy, the polymerising liquid substance 40 used in the prepreg for impact indication is UV curable epoxy-modified polyurethane acrylic emulsion, which has after curing appropriate adhesion to epoxy resin and safely isolates microencapsulated dye 20 and activator 30 from chemical influence of the epoxy components.

The ready-made prepreg may be used for an implementation of the function of impact visualization (usually necessary in polymer composites) in any product or article, during the article assembling. The ready-made prepreg may be manufactured for a specific need of another user. In the preferred embodiment shown in FIG.2, the assembled article 60 apart from the prepreg 50 is covered by and a kind of a polymer coating or top layer 70 over the prepreg.

A preferred method for making impact-indicating coating upon an article made of polymer composites consists of embedding the prepreg 50 in a top layer of polymer composite article 60 and covering the prepreg 50 by a kind of a polymer coating 70 over the prepreg 50. In this case, ready-made prepreg 50 may be used for indication of different impact types. Damages to the article 60 may be caused by critical quasi-static or dynamic load. The load may be either concentrated, or distributed.

Applied to the article an external load that is equal or less than that, which may create stress able to damage the article, at the same time corrupts microcapsules of dye 20. The microcapsules 20 break exposing the dye to the activator 30, causing a visible colour change at the point of microcapsules corruption. For example, in indication of possible damage caused by distributed external load normal to the surface of the prepreg 50 and article 60 the dye microcapsules 20 break by normal internal stress. The dye 20 comes into contact with the activator 30 and the colour change takes place at the load location. Alternatively, in the case of load which creates tangent to the prepreg 50 and article 60 surface stress (for example bending, torque et al.) dye capsules 20 break during delamination or tangential deformations of the prepreg 50. The colour change appears where delamination and other damages of the article take place.

The top layer polymer coating 70 serves for the control of the indication coating sensitivity to the external impact or load. For example in the case of bigger thickness of the polymer coating 70 over the prepreg 50 the sensitivity of the coating to external load normal to the surface is less. Important is the fact that the substance of the polymer coating over the prepreg must be transparent for activated dye to allow evaluating the appearance of damage.

Subject to the type of loading visualization, the prepreg and the polymer coating geometric dimensions are tailored. In the same way the type of assembling the article, the prepreg, and the polymer coating are chosen.

For example, should the method be applicable to detection of damages with respect to aircraft constructions the above mentioned ready-made prepreg and the epoxy polymer coating are assembled with a virgin epoxy polymer fibre reinforced composite article during one moulding process. The process may be vacuum assisted resin transfer moulding (VARTM) or other. In this case, there are some variations in use of components. For example, various reinforcing fibres and resin flow grids can be used. Using VARTM, the thickness of the polymer coating layer and correspondingly the sensitivity of the method, are tailored by the thickness of the used grid.

### EXAMPLES

The mixture for the prepreg impregnation: microcapsules (Microcapsules 500 black copy- are made from melamine-formaldehyde resin and the core of the capsules contains the solution of colourless leuco dyes, they are represented as dispersion in water 39 % by weight- Papierfabrik August Koehler AG) are mixed with colour developer (Colour developer- is represented as a mixture of Zn-dotated phenolic resins and Zn-salicylates and is available as liquid dispersion in water 42.5%- Papierfabrik August Koehler AG) and epoxy-modified polyurethane acrylic emulsion (HALWEDROL UV 20/40 W, DSM Company), according to the amounts shown in Table I.

As mentioned, microcapsules and colour developer were represented as dispersions. Therefore they were stirred thoroughly before using. To gain the required amount of solution were used 5 ml medical syringes. Used ratio of components was 6:3:2 for the dye microcapsules, the colour developer and epoxy-modified polyurethane acrylic emulsion respectively. Counting for 1 sample, it was taken 3 ml of microcapsules, 1, 5 ml of developer and 1 ml of epoxy-modified polyurethane acrylic emulsion and were poured into a glass and mixed thoroughly.

The dilution of the mixture with distilled water is possible but leads to reduction of final prepreg ability to detect critical loads that may cause damage. The prepared mixture was poured into watch glass and fibreglass [0/90] (VALMIERAS STIKLA SKIEDRA) was dipped into the mixture using tweezers and homogeneously impregnated.

**TABLE 1**

| components | dye | activator | polymerising liquid substance | fibre |
|---|---|---|---|---|
| name of components | Microcapsules 500 black copy | colour developer | UV curable epoxy-modified polyurethane acrylic emulsion | fibreglass [0/90] |
| quantity | 3 ml | 1.5 ml | 1 ml | 100 cm² |
| method | mixing | | | |
| | | | | impregnation with a mixture |
| | | | | UV curing for 60 minutes |

The application of alternative fibre material, not only fibreglass, is possible. In this case, using, for example, thinner nylon, less mixture is soaked up and, as a result, the ability of the prepreg to detect impact reduces.

The size of the fabric was approximately 100 cm². In various experiments the same amount of mixture and fabric were used. The redundant of the mixture which does not absorb into the fabric remained in the watch glass. After complete impregnation the fabric was placed on a flat surface and was situated under the UV lamp (Ultrahigh-pressure mercury quartz lamp with a capacity of 120 W).

After 30 minutes of curing, using tweezers, material was turned to the other side and passed on a clean surface for curing for 30 minutes on the other side of the material. The procedure of the prepreg manufacture is finished.

## Claims

1. A method of making an impact-indicating coating on a surface of an article made of composite materials comprising the following steps:
a) providing an article having an outer surface made of a composite material;
b) providing a prepreg comprising a fibre ply pre-impregnated in a curable polymer composition containing a microencapsulated dye and an activator;
c) applying the prepreg to the surface of the article;
d) curing the prepreg.

2. The method of claim 1 further comprising a step of partially pre-curing the prepreg before applying it to the article.

3. The method of claim 1 wherein the outer surface made of polymer composite material is in a semi-curable state.

4. The method of claim 1 wherein the article is provided in an uncured state and further comprising a step of curing the article after applying the prepreg.

5. The method of claim 4 wherein the steps of curing the article and curing the prepreg are performed simultaneously in the same technological cycle.

6. The method of any of claims 1 to 5 further comprising a step of applying a top layer onto the article covered by the prepreg, wherein the parameters of the top layer are chosen to provide a required sensitivity of the impact-indicating coating.

7. A prepreg for making an impact-indicating coating on a surface of an article made of composite materials comprising a fibre ply pre-impregnated in a curable polymer composition containing a microencapsulated dye and an activator.

8. The prepreg according to claim 7 wherein the fibre ply material is selected from the group consisting of glass, carbon, aramid, polyethylene, and nylon.

9. The prepreg according to claim 7 wherein the fibre ply is a woven ply.

10. The prepreg according to claim 7 wherein the fibre ply is a woven glass fibre ply.

11. The prepreg according to claim 7 wherein the curable polymer composition is selected from the group consisting of epoxy, polyester, acrylic, polyurethane or their combination.

12. The prepreg according to claim 7 wherein the curable polymer composition is an UV curable composition.

13. The prepreg according to claim 7 wherein the microencapsulated dye is a leuco dye.

14. The prepreg according to claim 7 wherein a colour of the fibre ply is selected to provide a contrast background for the dye when the dye is in an activated state.
